# EUROPEAN PATENT APPLICATION

(11) **EP 3 089 093 A1**
(43) Date of publication of application: **02.11.2016**
(21) Application number: 14874095.4
(22) Date of filing: 26.12.2014
(51) Int. Cl.: G06Q 20/36, G06Q 20/28, G06Q 50/10, G07G 1/12

(54) **ELECTRONIC MONEY TRANSACTION SYSTEM FOR INBOUND TOURISTS AT INTEGRATED RESORTS CONTAINING CASINOS**

(30) Priority: 27.12.2013 JP 2013273567
(71) Applicant: Risozu Corporation, Osaka-shi, Osaka 556-0006 (JP)
(72) Inventor: SHIMURA Akihiro, Osaka-shi Osaka 530-8228 (JP); SHIMODA Daisuke, Osaka-shi Osaka 530-8228 (JP); KURIHARA Yosuke, Osaka-shi Osaka 530-8228 (JP); KITAGAWA Ryota, Osaka-shi Osaka 530-8228 (JP); NAGATOME Kimiaki, Osaka-shi Osaka 556-0006 (JP); ABURAYA Koh, Tokyo 106-0044 (JP)
(74) Representative: Moreland, David
(86) International application number: PCT/JP2014/084582
(87) International publication number: WO 2015/099141

(57) **Abstract**

Provided is an electronic money transaction system whereby financial operations which will form the basis of an integrated resort and inbound tourism strategy are controlled, contributions are made to improve convenience and reduce stress on the part of inbound tourists, and safe and reassuring management at integrated resorts which contain casinos is possible. This electronic money transaction system comprises: a transaction card (1) which stores electronic money information and identification information including an inbound tourist's passport information; a general transaction processing unit (22) which carries out an electronic money transaction process according to a general product transaction or service provision at a general facility other than a casino; a casino transaction processing unit (33) which carries out the electronic money transaction process according to either a payment for playing a game or a payoff of winnings occurring at a casino service at an integrated resort; and electronic money processing units (23, 34) which update the electronic money information stored on the transaction card (1) on the basis of the transaction processes of the general transaction processing unit (22) and the casino transaction processing unit (33).

## Description

### TECHNICAL FIELD

The present invention relates to technology pertaining to an electronic money payment system for inbound tourists at integrated resorts including casinos; more specifically, the present invention relates to an electronic money payment system in which electronic money is used to make payment for various services or purchases of goods that are provided to inbound tourists at integrated resorts including casinos.

### BACKGROUND ART

Arguments which favor aggressive introduction of so-called IRs (integrated resorts) in Japan, because of their supposed ability to contribute to promotion of national tourism or to regional economies, or because of their supposed ability to contribute to improvement of the fiscal situation of national and local public entities as a result of the taxes they would presumably generate, have been put forth in recent years. This "IR" is a term used to collectively refer to a tourist facility complex, integrated within which there may be a casino facility, recreation facility, MICE (meeting facility, exhibition facility, etc.), entertainment facility, lodging facility, and/or other such facility or facilities deemed to contribute to the promotion of tourism; in particular, in view of the decision to hold the 2020 Olympics in Tokyo, in conjunction with the heightened opportunity to increase revenue from tourism due to promotional campaigns directed at inbound tourism (inbound tourists), advancement of projects related to integrated resorts including casinos together with transportation, communication, and various other such infrastructure maintenance activities is to be expected, and it is generally understood that this will contribute to Japan's growth strategy and will be of no small assistance to the tourist industry.

Furthermore, the number of inbound tourists in Japan exceeded 10,000,000 for the first time in the year H25 (2013), and it is anticipated that there will be even further increases in the future (governmental estimates are that there will be 30,000,000 persons per year). Looking to the future, stress-free expansion of ICT infrastructure such as will support the provision of pleasant tourist services to each and every one of the many inbound tourists with their diverse cultural backgrounds will be indispensable, and it is now the case that there is a need for rapid expansion so as to be able to actively attract inbound tourists.

At such IRs, there is a need to more actively accommodate services and elicit services for inbound tourists from private companies, and to at the same time take into consideration transportation, public wireless, and various other infrastructure maintenance projects, as well as the enhancement of communication tools (adoption of multilingual platforms) and various other inbound-tourism-related strategies, and to simultaneously properly collect taxes (national and local taxes, casino tax, etc.) from operators and the like who operate integrated resorts including casinos, to control management of funds within casino facilities and casino users (inbound tourists) for prevention of money laundering and other crimes, to contribute to promotion of regional economies, and to employ a payment system such as will make it possible for revenue from wholesome casino facilities operated with appropriate national supervision and management to be returned to society.

As conventional facilities including casinos and other such operational systems, e.g., as disclosed at Patent Reference No. 1, a constitution of a system for payment with respect to various services provided at a hotel equipped with a casino is known, hotel services at a hotel and casino services at a casino being integrated, use of a house card (IC card or the like) making it possible to receive provision of all services within the facility in cashless fashion without the need for cash transactions, and payment being moreover possible. Furthermore, as disclosed at Patent Reference No. 2, an online-type payment system is known in which a user who uses a casino that has received an operating license from a municipality employs a terminal device which is capable of connecting to a network and which is owned by the user, allowing the user to perform any of various games with which the casino is furnished by way of the network.

Indeed, while the payment systems disclosed at the aforementioned Patent Reference No. 1 and Patent Reference No. 2 do, because they permit cashless payment within a hotel or within an online casino, contribute to convenience of the user, and do also facilitate payment processes for the operator as well; and in particular, at the payment system of Patent Reference No. 2, while collection of casino tax and other such tax from a user who participates in the online casino is made possible, because such payment systems do not go beyond mere payment within a single facility or online site, from the standpoint of the aforementioned promotion of tourism and the regional economy, they are not capable of being employed as electronic money payment systems for inbound tourists at integrated resorts including casinos.

It so happens that in recent years various payment systems (electronic money payment systems) have been proposed which do not employ cash but employ electronic money as a new payment means when making payment for the billed amount of goods being purchased. This electronic money is such that monetary value has been converted into digital data which is stored, for example, at a payment card that incorporates an IC chip, updating of which so as to cause arbitrary increase or decrease thereof in correspondence to goods transactions and/or services provided permitting use thereof to remit funds in similar fashion as cash. In accordance with such an electronic money payment system, when making payment for the billed amount of goods being purchased, electronic money information is read from the payment card, and an amount corresponding to the monetary value of the billed amount of goods being purchased is subtracted therefrom, settlement with respect to the billed amount of goods being purchased being carried out by causing the electronic money information written to the storage unit of said card to be updated so as to be the electronic money information less the subtracted amount.

While such electronic money is in the process of coming into general widespread use as a payment means in Japan, where it is being used in the form of prepaid-type electronic money and the like, notwithstanding notable exceptions including Singapore, Germany, France, and some other countries in Europe, the degree to which its use has spread in Europe, the United States, and various countries throughout Asia is still low. However, in light of the fact that in Japan electronic money is used as payment means not only to remit funds for the billed amount of goods but also for railroad fare, the billed amount of food and beverages at restaurants, the billed amount of lodging at hotels, and so forth; and in particular, with respect to inbound tourists, if electronic money should come to be utilized not only at casino facilities but also at transportation infrastructure projects, public infrastructure projects, and other ordinary commercial facilities within Japan, it is to be expected that this will naturally make it possible to attract inbound tourists to integrated resorts including casinos, and that this will make it possible to provide stress-free diverse services as required for the livelihood and/or transit of inbound tourists who are staying in Japan. That is, assembly of a seamless electronic money payment system such as will accommodate the diverse tourism-related interests of inbound tourists, by contributing to Japanese domestic hospitality services, maintenance of which must be carried out in parallel with inbound-tourism-related strategies, it is to be expected that this will make it possible to greatly contribute to promotion of the tourism industry as well as to regional economies.

### PRIOR ART REFERENCES

### PATENT REFERENCES

Patent Reference No. 1: Japanese Patent Application Publication Kokai No. 2004-199207
Patent Reference No. 2: Japanese Patent Application Publication Kokai No. 2006-228081

### SUMMARY OF INVENTION

### PROBLEM TO BE SOLVED BY INVENTION

It is therefore an object of the present invention to provide an electronic money payment system that solves the foregoing conventional problems related to electronic money payment system(s) for inbound tourist(s) at integrated resort(s) including casino(s), and that permits control of financial operations serving as foundation for IRs and inbound-tourism-related strategies, that permits contributions to be made to reduction of stress and improved convenience for inbound tourist(s), and that permits safe and secure operation of integrated resort(s) including casino(s).

### MEANS FOR SOLVING PROBLEM

Problem(s) to be solved by the present invention being as described above, means for solving such problem(s) will next be described.

That is, at claim 1, an electronic money payment system in which electronic money is used to make payment for various services or purchases of goods that are provided to an inbound tourist at an integrated resort including a casino comprises payment card means that stores personal identification information including passport information of the inbound tourist and electronic money information; ordinary payment processing means that carries out processing of payment of electronic money corresponding to ordinary goods transactions and/or services provided at a non-casino facility based on personal identification information and electronic money information stored at the payment card means; casino payment processing means that carries out processing of payment of electronic money corresponding to refund of winnings and/or remittance of funds as game consideration arising in connection with casino services at the integrated resort based on the personal identification information and the electronic money information stored at the payment card means; and electronic money processing means that updates the electronic money information stored at the payment card means based on payment processing at the ordinary payment processing means and/or the casino payment processing means.

At claim 2, because an electronic money payment system in which electronic money is used to make payment for various services or purchases of goods that are provided to an inbound tourist at an integrated resort including a casino comprises payment card means that stores user ID information, separate user ID information being established for each user; electronic money information management means that manages electronic money information in association with the user ID information; user information management means that manages personal identification information including passport information of the inbound tourist in association with the user ID information; ordinary payment processing means that carries out processing of payment of electronic money corresponding to ordinary goods transactions and/or services provided at a non-casino facility based on the personal identification information and the electronic money information corresponding to the user ID information stored at the payment card means; casino payment processing means that carries out processing of payment of electronic money corresponding to refund of winnings and/or remittance of funds as game consideration arising in connection with casino services at the integrated resort based on the personal identification information and the electronic money information corresponding to the user ID information stored at the payment card means; and electronic money processing means that updates the electronic money information stored at the electronic money information management means based on payment processing at the ordinary payment processing means and/or the casino payment processing means.

At claim 3, this comprises casino payment management means that stores refunded money information based on refunded winnings and remitted money information corresponding to remittance of funds in the form of game consideration for which payment processing has been carried out at the casino payment processing means; and casino operator tax collection management means that calculates and stores an amount of a casino tax to be paid by a casino operator to a national and/or local public entity based on the refunded money information and the remitted money information stored at the casino payment management means.

At claim 4, this comprises user tax collection management means that, in the event that payment of refunded money of a prescribed amount or higher has been processed at the casino payment processing means, calculates and stores an amount of a tax to be paid by the user to a national and/or local public entity.

At claim 5, this comprises replenishment processing means that, upon receipt of a request for replenishment of electronic money corresponding to refund of winnings from the casino payment processing means, causes the electronic money information stored at the payment card means or the electronic money information management means to be updated so as to be replenished with the corresponding electronic money.

At claim 6, this comprises activity history information management means that manages information pertaining to a history of activities of the user as supported by electronic money usage status based on payment processing at the ordinary payment processing means and/or the casino payment processing means.

At claim 7, the ordinary payment processing means is such that, in the event that there is a certain degree of usage history at the same facility, processing is carried out such that a discount is applied to payment of electronic money corresponding to the ordinary goods transactions and/or the services provided.

### BENEFIT OF THE INVENTION

Among the benefits of the present invention are that it permits control of financial operations serving as foundation for IRs and inbound-tourism-related strategies, it permits contributions to be made to reduction of stress and improved convenience for inbound tourist(s), and it permits safe and secure operation of integrated resort(s) including casino(s).

### BRIEF DESCRIPTION OF THE DRAWINGS

[FIG. 1] Functional block diagram showing overall constitution of an electronic money payment system associated with a working example of the present invention.
[FIG. 2] Flowchart showing pattern of activity of inbound tourist who is staying in Japan.
[FIG. 3]Diagram showing sequence of events occurring during flow of processing for replenishment of electronic money.
[FIG. 4]Diagram showing sequence occurring during flow of events for making an electronic money payment at an ordinary facility.
[FIG. 5]Diagram showing sequence occurring during flow of events for making payment to remit funds for admission fee at a casino facility.
[FIG. 6]Diagram showing sequence occurring during flow of events for payments to receive refund of winnings and to remit funds for game consideration at a casino facility.
[FIG. 7] Functional block diagram showing overall constitution of an electronic money payment system in accordance with another working example.
[FIG. 8]Diagram showing sequence of events occurring during flow of processing for replenishment of electronic money in the context of an electronic money payment system in accordance with another working example.
[FIG. 9]Diagram showing sequence occurring during flow of events for making an electronic money payment at an ordinary facility in the context of an electronic money payment system in accordance with another working example.
[FIG. 10]Diagram showing sequence occurring during flow of events for making payment to remit funds for admission fee at a casino facility in the context of an electronic money payment system in accordance with another working example.
[FIG. 11]Diagram showing sequence occurring during flow of events for payments to receive refund of winnings and to remit funds for game consideration at a casino facility in the context of an electronic money payment system in accordance with another working example.

### EMBODIMENTS FOR CARRYING OUT THE INVENTION

Next, embodiments for carrying out the invention will be described.

First, the overall constitution of an electronic money payment system 100 in accordance with the present working example is described below.

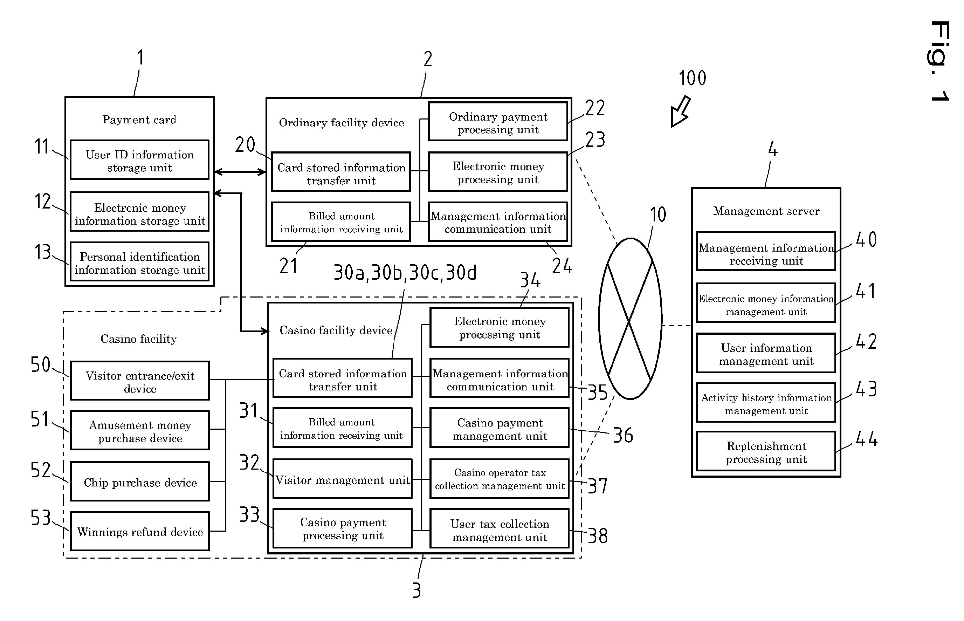

As shown in FIG. 1, electronic money payment system 100 of the present working example is a payment system in which electronic money is used to make payment for various services or purchases of goods that are provided to inbound tourists at an integrated resort including a casino, and which, in more specific terms, comprises payment card 1 serving as payment card means for storing personal identification information including passport information of an inbound tourist and electronic money information; ordinary facility device 2 that is installed at a non-casino facility (ordinary facility) and that carries out transfer of information with payment card 1; casino facility device 3 that is installed at a casino facility and that carries out transfer of information with payment card 1; and management server 4 that is installed at a central site which manages information transferred with payment card 1 and that is connected by way of communication network 10 to ordinary facility device 2 and casino facility device 3, and so forth.

The term "integrated resort including a casino" as used in the present working example includes a tourist facility complex, integrated within which there may be a casino facility, recreation facility, MICE (meeting facility, exhibition facility, etc.), entertainment facility, lodging facility, and/or other such facility or facilities deemed to contribute to the promotion of tourism, being a term used to collectively refer to a group of facilities which may also include transportation services and other facilities or the like in the region in question. This being the case, non-casino facilities (ordinary facilities) may, for example, include not only hotels, high-volume retail stores, restaurants, convenience stores, and other such facilities, but may also include railroads, airports, and various other such transportation service facilities. The electronic money payment system 100 of the present working example is constituted so as to be a seamless payment system that will accommodate the diverse tourism-related interests of the inbound tourists at the site in question.

Communication network 10 means a network of communication line(s) such as CATV (cable television) line(s), WiFi (registered trademark) or other such wireless line(s), and/or wired line(s), including those connected to the Internet. In particular, by causing all or a portion of communication network 10 to be a VPN (virtual private network) or other such prescribed dedicated communication line(s), and/or by employing technology for encryption of communication data or the like, it will be possible to increase the security of communication network 10.

Payment card 1 is constituted so as to be a noncontact-type card having built-in IC chip(s) storing personal identification information including passport information of inbound tourist(s) and electronic money information; more specifically, it is provided with user ID information storage unit 11, electronic money information storage unit 12, personal identification information storage unit 13, and so forth.

User ID information storage unit 11 stores user ID information, separate user ID information being established for each user. The user ID information stored at user ID information storage unit 11, because it is for identifying the payment card 1 and the user who owns this payment card 1, is not capable of being updated. Furthermore, as user ID information, identifying information imparted in advance to the built-in IC chip may be used in the form in which it was imparted thereto, or identifying information that lends itself to independent management may be newly imparted thereto.

Electronic money information storage unit 12 stores electronic money information containing monetary value(s) in the form of digital data. The electronic money information stored at electronic money information storage unit 12 is such as to permit the electronic money to be replenished (increased in value) by replenishment processing unit 44 of management server 4, and so as to permit decrease in value as a result of update by electronic money processing unit 34 of casino facility device 3 and electronic money processing unit 23 of ordinary facility device 2, described below.

Personal identification information storage unit 13 stores at least personal identification information including passport information of inbound tourist(s) serving as user(s). Personal identification information, which may include passport number, name, citizenship, birth date, and other such information listed on passports and/or visa information or the like, is used as information for proving the identity of a user at the time that a payment is made at a casino facility or ordinary facility or the like, described below. Note that inbound tourists may use prescribed terminal devices installed at foreign or domestic airports or the like in advance to store personal identification information at personal identification information storage unit 13 of payment card 1.

Note that payment card 1 need not necessarily have the outward experience of a card, it being possible that a mobile telephone, portable information terminal, or the like which has information similar to payment card 1 might, for example, be considered to be a payment card 1.

Ordinary facility device 2 is constituted so as to be a personal computer or other such information communication terminal installed primarily at ordinary facilities, being equipped with a control device comprising a CPU, memory, and the like; a display device; an input device; a storage device; and so forth, and being constituted such that execution of a program by the CPU and processing of information causes implementation of the functions at the respective processing units. More specifically, ordinary facility device 2 of the present working example is provided with card stored information transfer unit 20; billed amount information receiving unit 21; ordinary payment processing unit 22; electronic money processing unit 23; management information communication unit 24; and so forth.

Ordinary facility device 2 of the present working example, which may for example be installed at counters or the like within not only hotels, high-volume retail stores, restaurants, convenience stores, and other such facilities, but also railroads, airports, and various other such transportation services, carries out processing of electronic money payments when an accounting is made with respect to remittance of funds for billed amounts corresponding to goods transactions and/or services provided by way of card stored information transfer unit 20.

Card stored information transfer unit 20 is constituted so as to be a reader/writer device (terminal) that carries out processing involving reading and/or writing of personal identification information and electronic money information and user ID information stored at payment card 1; in the present working example, because a noncontact-type payment card 1 is employed, card stored information transfer unit 20 is constituted so as to be a card reader/writer permitting transfer of information to be carried out when noncontact-type payment card 1 is merely placed thereover and brought into close proximity therewith.

Billed amount information receiving unit 21 carries out processing in connection with receipt of goods and services information of the sort that might for example include merchandise name, merchandise number, and service name, but which at a minimum includes monetary amount(s) corresponding to goods transaction(s) and/or service(s) provided.

Based on personal identification information and electronic money information read at card stored information transfer unit 20, ordinary payment processing unit 22 carries out comparison with goods and services information (monetary amount) input at billed amount information receiving unit 21, decreases value of electronic money, and carries out payment processing. Following completion of payment processing at ordinary payment processing unit 22, an instruction to perform an update based on payment processing is sent to electronic money processing unit 23, described below, and a payment report is sent to management server 4, described below, by way of management information communication unit 24.

Note that where, based on personal identification information and/or user ID information read at card stored information transfer unit 20, it is found that there is a certain degree of usage history in terms of replenishment and/or usage at the same facility, ordinary payment processing unit 22 will carry out processing such that a discount is applied to payment of electronic money corresponding to ordinary goods transactions and/or services provided. Furthermore, in the event that upon comparison of goods and services information (monetary amount) and electronic money information it is determined that the electronic money balance is insufficient to meet the billed amount corresponding to goods transactions and/or services provided, in the event that upon referring to age, citizenship, or other such passport information of a visitor based on personal identification information it is found that the identity of the user cannot be ascertained, or in the event of other such circumstances, ordinary payment processing unit 22 will not carry out payment processing.

Upon receipt of an instruction to perform an update based on payment processing sent thereto from ordinary payment processing unit 22, electronic money processing unit 23 updates electronic money information stored at payment card 1 by way of card stored information transfer unit 20.

Ordinary facility device 2 is thus such that, during remittance of funds for billed amounts corresponding to goods transactions and/or services provided, based on personal identification information and electronic money information read at card stored information transfer unit 20, prescribed payment processing is carried out at ordinary payment processing unit 22, and electronic money information at payment card 1 is updated by way of card stored information transfer unit 20 at electronic money processing unit 23.

Casino facility device 3 is constituted so as to be a personal computer or other such information communication terminal installed at a casino facility, being equipped with a control device comprising a CPU, memory, and the like; a display device; an input device; a storage device; and so forth, and being constituted such that execution of a program by the CPU and processing of information causes implementation of the functions at the respective processing units. Casino facility device 3 of the present working example is provided with card stored information transfer units 30a through 30d; billed amount information receiving unit 31; visitor management unit 32; casino payment processing unit 33; electronic money processing unit 34; management information communication unit 35; casino payment storage unit 36; casino operator tax collection management 37; user tax collection management 38; and so forth.

Casino facility device 3 of the present working example is such that plurality of card stored information transfer units 30a through 30d are installed within a casino facility or facilities making up an integrated resort, casino facility device 3 carrying out processing of electronic money payment by way of card stored information transfer units 30a through 30d when funds are to be remitted as game-related consideration, refund is to be made in the form of winnings, or at other such times as may arise in connection with casino services.

Card stored information transfer units 30a through 30d are constituted so as to be reader/writer devices (terminals) that carry out processing involving reading and/or writing of personal identification information and electronic money information and user ID information stored at payment card 1; in the present working example, because a noncontact-type payment card 1 is employed, card stored information transfer units 30a through 30d are constituted so as to be card reader/writers permitting transfer of information to be carried out when noncontact-type payment card 1 is merely placed thereover and brought into close proximity therewith, without the need for occurrence of physical contact therebetween.

Card stored information transfer units 30a through 30d are respectively connected to visitor entrance/exit device(s) 50, amusement money purchase device(s) 51 for casino games, chip purchase device(s) 52 for table games, winnings refund device(s) 53, and so forth, which are installed at casino facility or facilities.

Visitor entrance/exit device(s) 50, which are installed at casino facility entrance(s)/exit(s), are device(s) for collecting admission fee(s) from visitors who enter casino facility or facilities. At casino facility device 3 of the present working example, card stored information transfer unit 30a is connected to such visitor entrance/exit device 50 so as to permit remittance of funds for admission fee(s) to be made in the form of an electronic money payment.

Amusement money purchase device 51 is a device for purchase of amusement money (coins, paper currency, prepaid cards, etc.) used at game machines where games are played electronically and/or mechanically after the fashion of a slot machine, poker machine, dice machine, or darts machine; furthermore, chip purchase device 52 is an installation for purchase of chips, medallions, or the like used at game machines that do not directly handle amusement money after the fashion of a table game. At casino facility device 3 of the present working example, card stored information transfer unit 30b is connected to amusement money purchase device 51, and card stored information transfer unit 30c is connected to chip purchase device 52, so as to permit remittance of funds for game consideration to be made in the form of an electronic money payment during purchase of amusement money and/or chip(s).

Winnings refund device 53 is a device for receiving refund of acquired winnings issued in the form of a ticket, coupon, or the like listing information indicating total amount of acquired winnings in addition to paper currency and/or coins at game machines. At casino facility device 3 of the present working example, card stored information transfer unit 30d is connected to winnings refund device 53 so as to permit refund of winnings to be made in the form of an electronic money payment, such that payment card 1 is replenished with electronic money in an amount corresponding to the total amount of coins, tickets, and other such winnings at management server 4 (replenishment processing unit 44).

Billed amount information receiving unit 31 carries out processing in connection with receipt of casino usage information of the sort that might for example include number of visitors admitted; unit cost of amusement money, chips, or the like; and total amount of winnings, but which at a minimum includes amount(s) to be refunded in the form of winnings, amount(s) of funds to be remitted in the form of game consideration, and admission fee(s) arising in connection with casino services.

Based on personal identification information read at card stored information transfer unit 30a connected to visitor entrance/exit device 50, visitor management unit 32 refers to visitor age, citizenship, and/or other such passport information or the like to determine whether a person is someone who should be allowed entrance into the casino facility. In the event that it is determined at visitor management unit 32 that a visitor should not be allowed entrance thereinto, notification to an administrator or the like of the casino facility is made by way of warning device, not shown.

Based on personal identification information and electronic money information read at card stored information transfer units 30a through 30d, casino payment processing unit 33 increases or decreases value of electronic money and carries out payment processing. In the event that, as a result of carrying out payment processing at casino payment processing unit 33, comparison is made with casino usage information (monetary amount) input at billed amount information receiving unit 31 and value of electronic money is to be decreased, an instruction to perform an update based on payment processing is sent to electronic money processing unit 34, described below, and a payment report is sent to management server 4, described below, by way of management information communication unit 35. On the other hand, in the event that value of electronic money is to be increased, a replenishment request is sent to management server 4 (replenishment processing unit 44), described below, by way of management information communication unit 35.

Note that, in situations such as those in which funds are to be remitted in the form of game consideration arising in connection with casino services, in the event that upon comparison of casino usage information (monetary amount) and electronic money information it is determined that the electronic money balance is insufficient to meet the billed amount corresponding to game consideration arising in connection with casino services and/or casino facility admission fee(s), in the event that upon referring to age, citizenship, or other such passport information of a visitor based on personal identification information it is found that the identity of the user cannot be ascertained, or in the event of other such circumstances, casino payment processing unit 33 will not carry out payment processing. Furthermore, casino payment processing unit 33 may also be setup in such fashion that processing of payments of a preestablished limit amount or higher are prevented from being carried out. Establishing such restrictions and limiting payment amount in such fashion also permits contributions to be made with respect to measures for addressing compulsive gambling, which is an important topic when contemplating introduction of IRs.

Upon receipt of an instruction to perform an update based on payment processing sent thereto from casino payment processing unit 33, electronic money processing unit 34 updates electronic money information stored at payment card 1 by way of card stored information transfer units 30a through 30d.

Casino payment management unit 36 stores refunded money information based on refunded winnings and remitted money information corresponding to remittance of funds in the form of game consideration for which payment processing has been carried out at casino payment processing unit 33. At casino payment storage unit 36, not only winnings and remitted funds of users, but also amusement money, winnings, or other such history at each machine, or other items such as may be prescribed by authorities responsible for regulating operation of casino facilities (national and local public entities, commissions responsible for regulation of gaming and public safety commissions in various localities, and so forth) are managed and stored. In this way, as a result of management of various types of information at casino payment storage unit 36, it will be possible, for example, to properly fulfill obligations to make reports to the authorities, and it will be possible to maintain the integrity of the casino facility.

Casino operator tax collection management unit 37 calculates and stores amount(s) of casino tax(es) to be paid by the casino operator to national and local public entities based on refunded money information and remitted money information stored at casino payment management unit 36. Such amount(s) of casino tax(es) are determined by arithmetic processing in which casino tax rate(s) defined by national and local public entities are applied to refunded money and remitted money. In addition to national and local taxes, casino tax(es) may include amounts collected for use as funds for return to the region, amounts collected as cost of CSR operations provided to inbound-tourism-related operators or the like with respect to inbound tourists, and so forth.

To give an example, the city of Enghien-les-Bains in France is making efforts to actually return casino taxes to the region. Apart from such distinctions as the fact that the city of Enghien-les-Bains has been selected for the "UNESCO Creative Cities Network," 13% of the city's total budget has been set aside for cultural projects, not least among which is the fact that what are primarily casino taxes are being returned to the region in the form of funding for beautification of the environment, preservation of architectural structures, expansion of educational facilities, and other such projects contributing to the safety and security of the region. In addition, surveys have revealed that, among casino operators and city residents, casino taxes have contributed to education and urban development of the region, and there is reported to be an awareness that casino taxes have assisted in achieving wholesome development. Indeed, the city of Enghien-les-Bains is well on its way to being recognized as one of the most beautiful cities in France, and besides the fact that it has a low crime rate, the fact residential land values are the highest within the department of Val-d'Oise, and so forth, it has attained special status among the northern suburbs of Paris, having achieved a distinctive reputation centered on its casino facilities.

At casino operator tax collection management unit 37, e.g., where there is a regulation setting forth that casino tax of a specified rate applies to the total amount of money remitted in the form of funds remitted as game consideration by users at a casino facility, the amount of the casino tax would be calculated by retrieving remitted money information for the total amount of money remitted from casino payment management unit 36. Furthermore, e.g., where there is a regulation setting forth that casino tax of a specified rate applies to the difference between the money remitted in the form of funds remitted as game consideration by users at a casino facility and the money refunded in the form of winnings obtained, remitted money information for the money remitted and refunded money information for the money refunded would respectively be retrieved from casino payment management unit 36, and the amount of the casino tax would be calculated based on the difference therebetween.

Note that casino operator tax collection management unit 37 may be connected by way of a communication network to a communication control unit of the local public entity or the like having jurisdiction so as to permit the casino tax being managed thereby to be viewed, and/or may be connected by way of a network to a bank account for electronic transfer of funds at a prescribed bank designated by a national or local public entity so as to permit casino tax to be paid in online fashion.

In the event that payment of refunded money of a prescribed amount or higher has been processed at casino payment processing unit 33, user tax collection management unit 38 calculates and stores the amount of tax to be paid by the user to the national or local public entity. The amount of tax to be paid by the user to the national or local public entity is determined by arithmetic processing in which prescribed tax rate(s) defined by national and local public entities are applied to refunded money.

In this way, when receiving refund of winnings or remitting funds for billed amounts in correspondence to refund of winnings and/or remittance of funds in the form of game consideration arising in connection with casino services, casino facility device 3 is such that, based on personal identification information, electronic money information, and user ID information read at card stored information transfer units 30a through 30d, prescribed payment processing is carried out at casino payment processing unit 33, and electronic money information at payment card 1 is updated by electronic money processing unit 34 by way of card stored information transfer units 30a through 30d.

Management server 4 is constituted so as to be a server device comprising a Web server; application server; database; and so forth, being equipped with a control device comprising a CPU, main memory, and the like; an input device; a storage device; and so forth, and being constituted such that execution of a program by the CPU and processing of information causes implementation of the functions at the respective processing units. Management server 4 of the present working example is provided with management information management unit 40; electronic money information management unit 41; user information management unit 42; activity history information management unit 43; replenishment processing unit 44; and so forth.

Management information receiving unit 40 carries out processing in connection with receipt of information including replenishment commands and payment reports from management information communication unit 35 of casino facility device 3 or management information communication unit 24 of ordinary facility device 2 by way of communication network 10.

Electronic money information management unit 41 stores electronic money information containing monetary value(s) in the form of digital data in similar fashion as electronic money information storage unit 12 at payment card 1, electronic money information stored at electronic money information storage unit 12 of payment card 1 being managed in such fashion that it is associated with user ID information established separately for each user. The electronic money information stored at electronic money information management unit 41 is such as to permit the electronic money to be increased in value upon receipt of replenishment processing by replenishment processing unit 44, described below, and so as to permit decrease in value upon receipt of a payment report from casino payment processing unit 33 of casino facility device 3 or ordinary payment processing unit 22 of ordinary facility device 2, described above.

User information management unit 42 manages user ID information such that separate user ID information are established for each user and such that persons using electronic money payment system 100 of the present working example are treated as card members, and also causes personal identification information (passport number, name, citizenship, birth date, and other such information listed on passports and/or visa information or the like), address, telephone number (including mobile phone number), email address, and other such contact information, yearly income, work address, number of years of continuous employment, marriage status, medical data for emergency or critical care (drug name, whether there are any existing conditions, blood type details, and so forth), and other such information of inbound tourists who are users to be managed in association with user ID information.

Activity history information management unit 43 causes information (activity history information) pertaining to the history of activities of a user as supported by electronic money usage status to be organized in the form of a database and to be managed in association with user ID information. Activity history information may include not only information pertaining to electronic money balances, but also information pertaining to amounts, dates and times, locations, and so forth of usages and replenishments made by inbound tourists based on their electronic money payment histories.

Note that the activity history information managed by activity history information management unit 43 may be provided to national or local public entities and/or private companies for use as big data either for a fee or at no charge. Note, however, that due to circumstances related to the so-called Personal Information Protection Law, content of activity history information must be restricted by server operators so as to prevent unauthorized access thereof; furthermore, personal information protection policies must be observed so as to prohibit diversion or use for other than the intended purpose by third parties regardless of whether for a fee or at no charge, and only the minimum necessary activity history information is permitted to be provided. In particular, such activity history information may be utilized as big data capable of contributing to criminal investigations and the like; for example, in the event of occurrence of a crime, incident, or accident involving an inbound tourist, such activity history information may be provided as investigative information to the police or other such organization after taking steps to ensure that legal measures have been put in place.

Replenishment processing unit 44 receives requests for replenishment of electronic money corresponding to refund of winnings from casino payment processing unit 33 of casino facility device 3, requests for replenishment from a payment card accepting machine for replenishment of electronic money (not shown), and so forth; updates electronic money information stored at payment card 1; and carries out replenishment of the corresponding electronic money.

Next, an example of the flow of payment processing at electronic money payment system 100 in accordance with the present working example is described below along with the pattern of activity of a user.

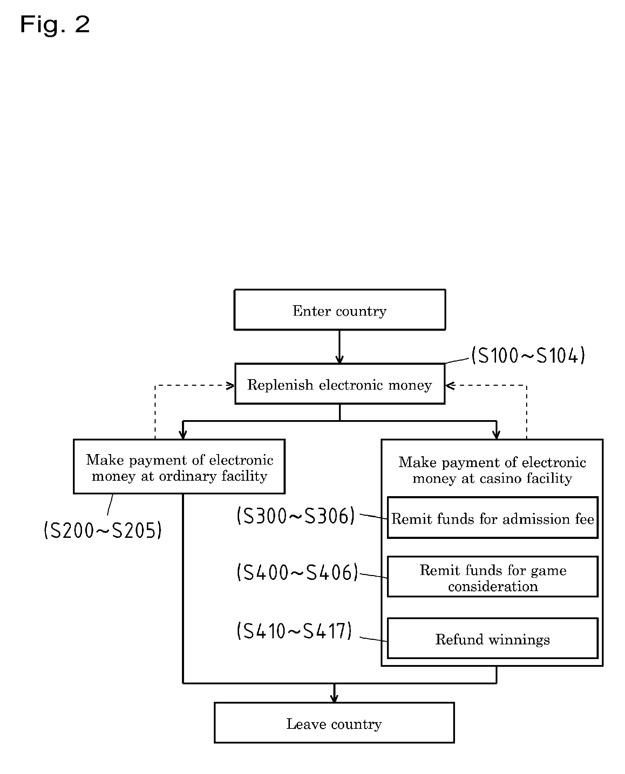

Below, as shown in FIG. 2, a scenario is assumed in which a user (inbound tourist) carries out electronic money payments at various facilities in an integrated resort including a casino from a time following entry into the country until the time of departure therefrom, description being respectively given with respect to flow of processing for replenishment of electronic money at payment card 1 (S100 through S104); flow of processing at a time when an electronic money payment is made at an ordinary facility (S200 through S205); flow of processing at a time when payment is made to remit funds in the form of admission fee(s) at a casino facility (S300 through S306); flow of processing at a time when payment is made to remit funds in the form of game consideration at a casino facility (S400 through S406); and flow of processing at a time when payment is made for refund of winnings at a casino facility (S410 through S417).

### Replenishment of Electronic Money

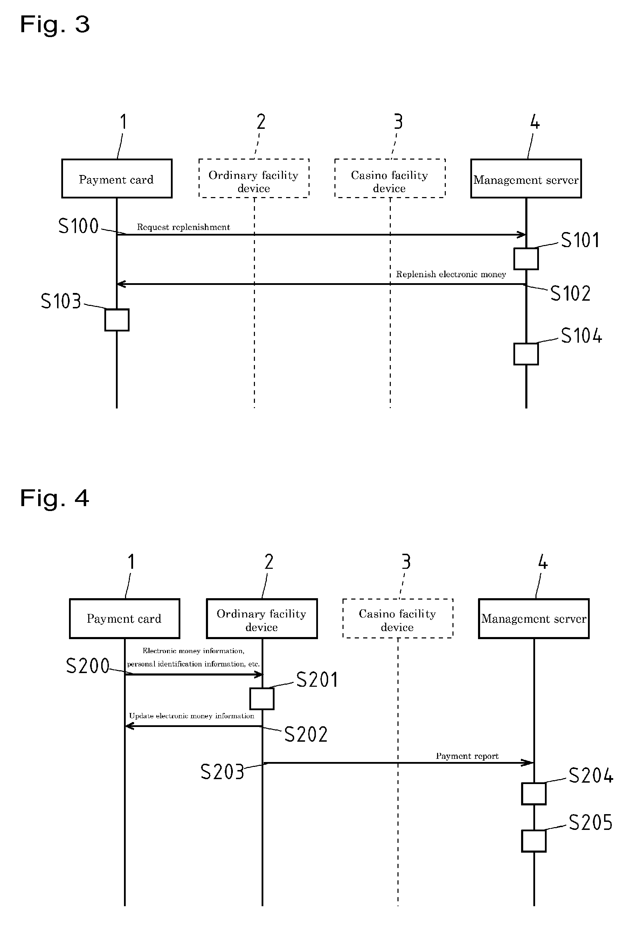

As shown in FIG. 3, in the event that a user is to replenish electronic money at payment card 1, payment card 1 is placed on or near a prescribed payment card accepting machine for replenishment of electronic money (not shown) installed at an airport, bank, or the like; cash, a credit card, or the like is inserted; and a request is made to management server 4 to replenish (write) electronic money together with user ID information (S100). In response to this request, management server 4 might for example perform a lookup request at a center of a financial institution managing an account of the user, a credit card center, or the like, and after confirming that payment of the requested monetary amount is possible (S101), payment card 1 is replenished with electronic money corresponding to the requested monetary amount at replenishment processing unit 44 (S102).

In addition, electronic money information is stored at electronic money information storage unit 12 of payment card 1 (S103); and management server 4 is such that, upon receipt of replenishment processing by replenishment processing unit 44, update is carried out so as to increase the value of the electronic money information managed in association with user ID information at electronic money information management unit 41 by an amount corresponding to the requested monetary amount (S104).

Note that replenishment of electronic money at payment card 1 by the user may be carried out either domestically or overseas; furthermore, as will be described below, in the event that electronic money balance becomes low as a result of electronic money payment made at a casino facility or at an ordinary facility when staying at a domestic location, this may be carried out by, at appropriate times, repeatedly using a payment card accepting machine for replenishment of electronic money (not shown) that is installed at a location which is either a casino facility or an ordinary facility (see dashed lines with arrowheads at FIG. 2). Moreover, when payment card 1 is brought back to an overseas location, the electronic money replenished at payment card 1 may be withdrawn in the local currency of that foreign country.

In the event that a user does not possess a payment card 1, cash or a credit card may be inserted in a prescribed electronic money storing payment card issuing machine (not shown) to receive issuance of a payment card 1 on which electronic money information corresponding to the requested monetary amount has been stored.

### Electronic Money Payment at Ordinary Facility

As shown in FIG. 4, when a user makes an electronic money payment at an ordinary facility; or more specifically, when making payment to remit funds for the billed amount of goods at the time that a purchase is made at a store, payment card 1 is first placed on or near card stored information transfer unit 20 of ordinary facility device 2, personal identification information and electronic money information are read at card stored information transfer unit 20 of ordinary facility device 2 (S200), and comparison is made with goods and services information (monetary amount) input at billed amount information receiving unit 21; and if the electronic money information is sufficient for the payment amount of the goods being purchased, payment processing is carried out such that the value of the electronic money is decreased (S201).

Ordinary facility device 2 is such that upon receipt by electronic money processing unit 23 of an instruction to perform an update based on payment processing sent from ordinary payment processing unit 22, the electronic money information of the payment card 1 which has been placed on or near card stored information transfer unit 20 of ordinary facility device 2 is updated at electronic money processing unit 23 based on the electronic money information (electronic money balance information) as modified following the electronic money payment (S202). Furthermore, ordinary facility device 2 causes a payment report including the modified electronic money information (electronic money balance information) as well as user ID information to be sent to management server 4 by way of management information communication unit 24 (S203).

Management server 4 receives the payment report from ordinary facility device 2, carries out update by causing the value of the electronic money information managed at electronic money information management unit 41 to be decreased based on the electronic money information that has been modified as a result of payment (S204), and causes electronic money balance information and other such activity history information managed at activity history information management unit 43 to be updated based on information pertaining to the history of purchases by the user at ordinary facilities that is included in the payment report (S205).

### Electronic Money Payment (Remitting Funds for Admission Fee) at Casino Facility

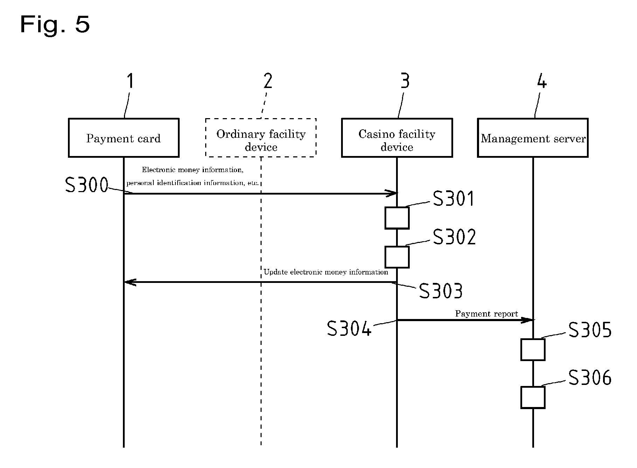

As shown in FIG. 5, when a user makes an electronic money payment at a casino facility; or more specifically, when making payment to remit funds for the admission fee at a ca facility, payment card 1 is first placed on or near card stored information transfer unit 30a of visitor entrance/exit device 50 installed at the casino facility entrance/exit, personal identification information is read at card stored information transfer unit 30a of casino facility device 3 (S300), and determination is made at visitor management unit 32 as to whether the user is a person who should be allowed entrance into the casino facility (S301).

Casino facility device 3 is such that if it is determined that the user is a person who should be allowed entrance into the casino facility, then, at casino payment processing unit 33, based on personal identification information and electronic money information read at card stored information transfer unit 30a, comparison is made with casino usage information pertaining to the admission fee at visitor entrance/exit device 50 input at billed amount information receiving unit 31; and if the electronic money information is sufficient for the payment amount of the admission fee, payment processing is carried out such that the value of the electronic money is decreased (S302).

Casino facility device 3 is such that upon receipt by electronic money processing unit 34 of an instruction to perform an update based on payment processing sent from casino payment processing unit 33, the electronic money information of the payment card 1 which has been placed on or near card stored information transfer unit 30a of casino facility device 3 is updated at casino payment processing unit 33 based on the electronic money information (electronic money balance information) as modified following the electronic money payment (S303). Furthermore, casino facility device 3 causes a payment report including the modified electronic money information (electronic money balance information) as well as user ID information to be sent to management server 4 by way of management information communication unit 35 (S304).

Management server 4 receives the payment report from casino facility device 3, carries out update by causing the value of the electronic money information managed at electronic money information management unit 41 to be decreased based on the electronic money information that has been modified as a result of payment (S305), and causes electronic money balance information and other such activity history information managed at activity history information management unit 43 to be updated based on information pertaining to the casino facility admission history of the user that is included in the payment report (S306).

### Electronic Money Payments (Remitting Funds as Game Consideration and Receiving Refund of Winnings) at Casino Facility

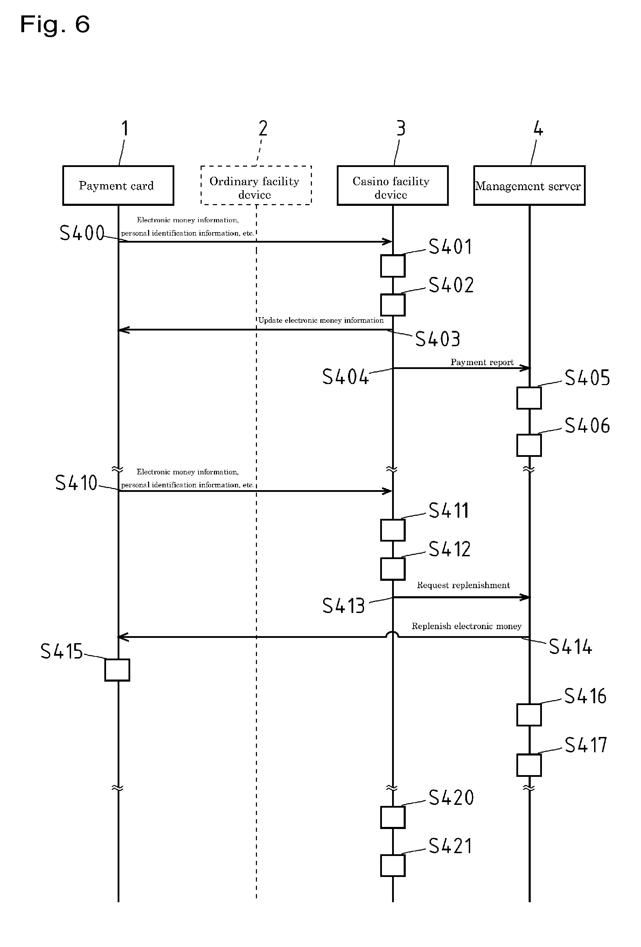

As shown in FIG. 6, when a user makes an electronic money payment at a casino facility; or more specifically, first, when making payment to remit funds in the form of game consideration arising in connection with casino services, a user who has entered a casino facility places payment card 1 on or near card stored information transfer unit 30b or 30c of amusement money purchase device 51 or chip purchase device 52 installed at installed at a prescribed casino game machine or table game machine.

Personal identification information is then read at card stored information transfer unit 30b or 30c of casino facility device 3 (S400), and based on such personal identification information, determination is made at casino payment processing unit 33 as to whether the user is a person whose identity can be ascertained (S401). In addition, casino facility device 3 is such that if the user is a person whose identity can be ascertained, then, based on personal identification information and electronic money information read at card stored information transfer unit 30b or 30c, comparison is made with the amount of funds to be remitted in the form of game consideration at amusement money purchase device 51 or chip purchase device 52 input at billed amount information receiving unit 31; and if the electronic money information is sufficient for the payment amount of the funds to be remitted in the form of game consideration, payment processing is carried out such that the value of the electronic money is decreased (S402).

Casino facility device 3 is such that upon receipt by electronic money processing unit 34 of an instruction to perform an update based on payment processing sent from casino payment processing unit 33, the electronic money information of the payment card 1 which has been placed on or near card stored information transfer unit 30b or 30c of casino facility device 3 is updated at electronic money processing unit 34 based on the electronic money information (electronic money balance information) as modified following the electronic money payment (S403). Furthermore, casino facility device 3 causes a payment report including the modified electronic money information (electronic money balance information) as well as user ID information to be sent to management server 4 by way of management information communication unit 35 (S404).

Management server 4 receives the payment report from casino facility device 3, carries out update by causing the value of the electronic money information managed at electronic money information management unit 41 to be decreased based on the electronic money information that has been modified as a result of payment (S405), and causes electronic money balance information and other such activity history information managed at activity history information management unit 43 to be updated based on information pertaining to the casino facility amusement history of the user that is included in the payment report (S406).

On the other hand, when receiving payment for refund of winnings arising in connection with casino services, payment card 1 is placed on or near card stored information transfer unit 30d of winnings refund device 53 installed at a prescribed information counter or the like, personal identification information and electronic money information are read at card stored information transfer unit 30d of casino facility device 3 (S410), and payment processing is carried out such that the value of the electronic money is increased in correspondence to the winnings to be refunded at casino payment processing unit 33 (S411).

At this time, if the refunded money for which payment processing was carried out at casino payment processing unit 33 is a prescribed amount or higher, user tax collection management unit 38 causes the amount of tax to be paid by the user to the national or local public entity to be calculated and stored (S412). In addition, based on the payment processing at casino payment processing unit 33, casino facility device 3 causes a request for replenishment of electronic money in a monetary mount corresponding to the refunded winnings to be sent to management server 4 by way of management information communication unit 35 (S413).

Management server 4 is such that, upon receipt of the replenishment request from casino facility device 3, payment card 1 is replenished with electronic money corresponding to the requested monetary amount at replenishment processing unit 44 (S414), and the electronic money information stored at electronic money information storage unit 12 of payment card 1 is updated (S415). Furthermore, management server 4 is such that update is carried out so as to increase the value of the electronic money information managed at electronic money information management unit 41 by an amount corresponding to the requested monetary amount (S416), and such that electronic money balance information and other such activity history information managed at activity history information management unit 43 is updated based on information pertaining to the casino facility amusement history of the user (S417).

Moreover, casino facility device 3 is such that, in accompaniment to the aforementioned series of payment processing operations for refund of winnings or remittance of funds as game consideration, refunded money information based on refunded money or remitted money information corresponding to money remitted as game consideration, for which processing of payment was carried out at casino payment processing unit 33, is stored at casino payment management unit 36 (S420); and, at casino operator tax collection management unit 37, amount(s) of casino tax(es) to be paid by the casino operator to national and local public entities are calculated and stored based on refunded money information and remitted money information stored at casino payment management unit 36 (S421).

As described above, because electronic money payment system 100 of the present working example is an electronic money payment system in which electronic money is used to make payment for various services or purchases of goods that are provided to inbound tourists at an integrated resort including a casino, and because it is equipped with payment card 1 that stores personal identification information including passport information of an inbound tourist and electronic money information; ordinary payment processing unit 22 that carries out processing of payment of electronic money corresponding to ordinary goods transactions and/or services provided at a non-casino facility based on personal identification information and electronic money information stored at payment card 1; casino payment processing unit 33 that carries out processing of payment of electronic money corresponding to refund of winnings and/or remittance of funds as game consideration arising in connection with casino services at an integrated resort based on personal identification information and electronic money information stored at payment card 1; and electronic money processing units 23, 34 that update electronic money information stored at payment card 1 based on payment processing at ordinary payment processing unit 22 and/or casino payment processing unit 33, it permits control of financial operations serving as foundation for IRs and inbound-tourism-related strategies, it permits contributions to be made to reduction of stress and improved convenience for inbound tourists, and it permits safe and secure operation of an integrated resort including a casino.

That is, at electronic money payment system 100 of the present working example, it is possible to carry out processing of payment of electronic money corresponding to ordinary goods transactions and/or services provided within facility or facilities of an integrated resort including a casino, and by properly carrying out processing of payment of electronic money corresponding to refund of winnings and/or remittance of funds as game consideration arising in connection with casino services, it is possible to carry out control of management of funds of inbound tourists from the standpoint of the user and/or the casino operator, and it is possible to achieve proper collection of taxes and effective prevention of money laundering.

Furthermore, from the standpoint of the inbound tourist user, because it is sufficient merely to have payment card 1, this permits improvement in convenience due to the cashless aspects thereof, causing such inbound tourists to be naturally drawn to and subjected to promotional campaigning by the integrated resort, as a result of which it is to be expected that this will lead to promotion of the regional economy. In particular, because at the time that payment processing is carried out by ordinary payment processing unit 22 or casino payment processing unit 33, this is done based on personal identification information that includes the passport information of the inbound tourist, this permits reduction in the stress that would otherwise accompany presentation of the passport each time that a payment is to be made; furthermore, because proper proof of the identity of the inbound tourist user is accomplished, this leads to reduction in crimes committed by inbound tourists, and it is possible for the integrated resort including a casino to be operated in wholesome fashion with appropriate supervision and management.

Furthermore, because electronic money payment system 100 of the present working example is equipped with casino payment management unit 36 that stores refunded money information based on refunded winnings and remitted money information corresponding to remittance of funds in the form of game consideration for which payment processing has been carried out at casino payment processing unit 33, and is equipped with casino operator tax collection management unit 37 that calculates and stores amounts of casino taxes to be paid by the casino operator to national and local public entities based on refunded money information and remitted money information stored at casino payment management unit 36, as a result of management of various types of information at casino payment storage unit 36, it is possible, for example, to properly fulfill obligations to make reports to the authorities, and it is possible to maintain the integrity of the casino facility. Furthermore, because amounts of casino taxes are properly managed by casino operator tax collection management unit 3, proper tax collection from the casino operator is made possible, making it possible to contribute to improvement of the fiscal situation of the national or local public entity.

Furthermore, in the event that the refunded money for which payment has been processed at casino payment processing unit 33 is a prescribed amount or higher, because it is equipped with user tax collection management unit 38 that calculates and stores the amount of tax to be paid by the user to the national or local public entity, proper tax collection from the casino user is made possible, making it possible to contribute to improvement of the fiscal situation of the national or local public entity.

Furthermore, because it is equipped with a replenishment processing unit 44 which is such that, upon receipt of a request for replenishment of electronic money corresponding to refund of winnings from casino payment processing unit 33, causes the electronic money information stored at payment card 1 to be updated so as to be replenished with the corresponding electronic money, the fact that refund of winnings at the casino facility can be carried out as a result of payment processing occurring in conjunction with management server 4 makes it possible for such electronic money to be replenished onto payment card 1 and be carried away together therewith, permitting improvement in convenience for the user.

Furthermore, because it is equipped with activity history information management unit 43 that manages information pertaining to histories of activities of users as supported by electronic money usage status based on payment processing carried out at ordinary payment processing unit 22 and casino payment processing unit 33, activity history information of users managed at activity history information management unit 43 can be utilized as big data; and by making it possible for appropriate services to be provided in such fashion that they are directed toward targeted user(s), it will be possible to more efficiently attract inbound tourists to the integrated resort.

Furthermore, where it is found that there is a certain degree of usage history at the same facility, because ordinary payment processing unit 22 will carry out processing such that a discount is applied to payment of electronic money corresponding to ordinary goods transactions and/or services provided, this can act as an incentive for inbound tourist users, and can act to promote even greater usage thereby.

Note that the constitution of electronic money payment system 100 is not limited to the foregoing working example, various modifications being possible without departing from the object of the present invention. At the working example indicated below, detailed description of aspects of the constitution that are identical to those at the above working example will be omitted.

That is, whereas in electronic money payment system 100 of the above working example (see, inter alia, FIG. 1), in the context of payment card 1, as card information, there was electronic money information (electronic money information storage unit 12) and personal identification information (personal identification information storage unit 13), the constitution being such that payment processing was carried out at ordinary facility device 2 and casino facility device 3, it is also possible, for example, to employ a constitution in which payment card 1 has no electronic money information and/or the like, payment processing and/or management of electronic money information being carried out at management server 4.

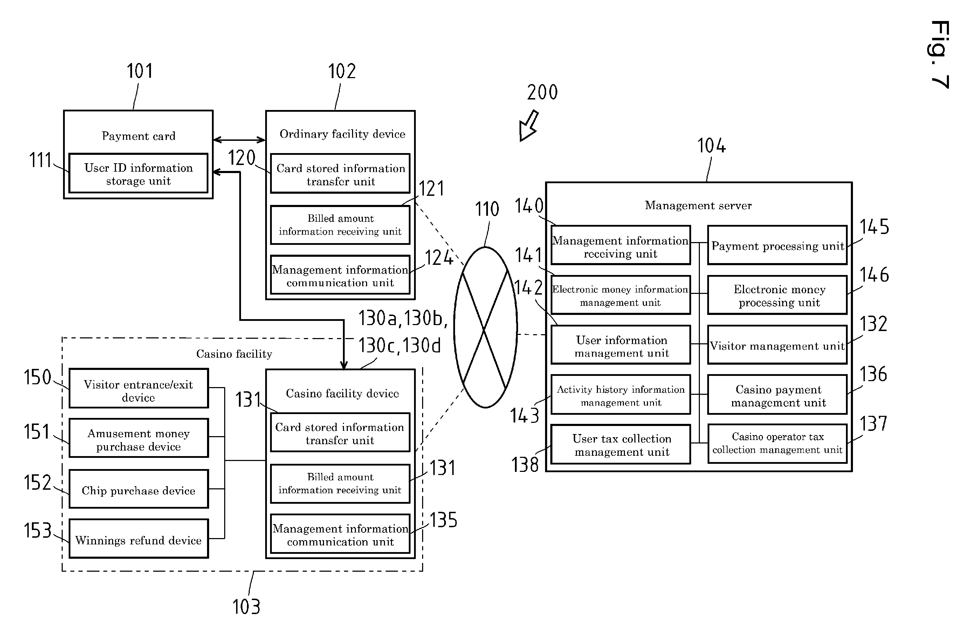

Electronic money payment system 200 at the working example shown in FIG. 7 is different from the above working example (see, inter alia, FIG. 1) in that payment processing and/or management of electronic money information is carried out at management server 4; more specifically, payment card 101 is provided only with user ID information storage unit 111 that stores user ID information, management server 104 being provided with electronic money information management 141 that manages electronic money information in association with user ID information, and with user information management unit 142 that manages personal identification information in association with user ID information.

Furthermore, management server 104 is provided with payment processing unit 145 that serves as casino payment processing means and ordinary payment processing means and that carries out electronic money payment processing based on personal identification information and electronic money information corresponding to user ID information stored at payment card 101, and with electronic money processing unit 146 that updates electronic money information stored at electronic money information management unit 142 based on payment processing at payment processing unit 145, and, unlike the above working example (see, inter alia, FIG. 1), is moreover respectively provided with visitor management unit 132, casino payment management unit 136, casino operator tax collection management unit 137, and user tax collection management unit 138.

Below, an example of the flow of payment processing at electronic money payment system 200 in accordance with the present working example is described along with the pattern of activity of a user in similar fashion as was done with respect to the above working example (see, inter alia, FIG. 1).

### Replenishment of Electronic Money

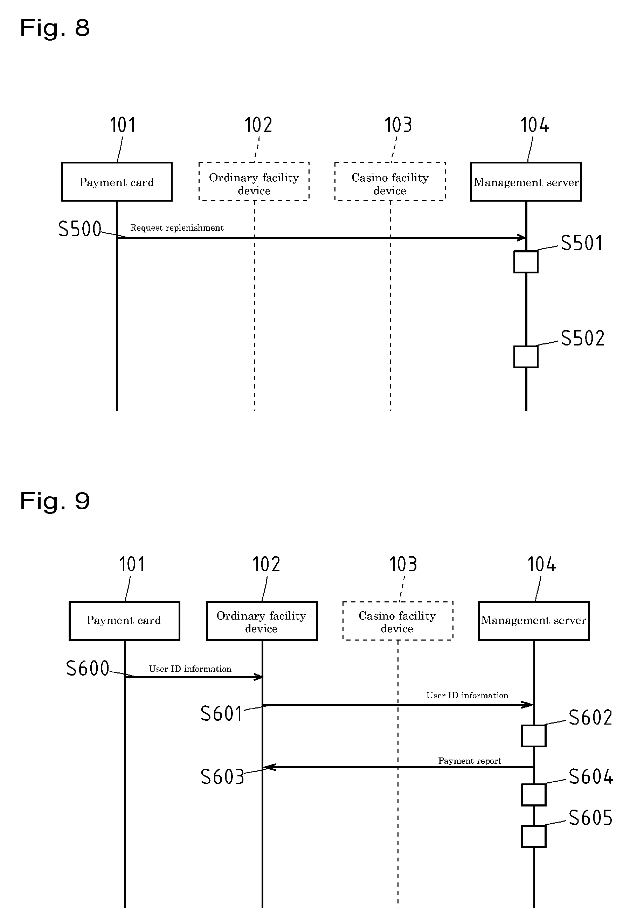

As shown in FIG. 8, in the event that a user is to replenish electronic money at payment card 101, payment card 101 is placed on or near a prescribed payment card accepting machine for replenishment of electronic money (not shown); cash, a credit card, or the like is inserted; and a request is made to management server 104 to replenish (write) electronic money together with user ID information (S500). In response to this request, management server 104 might for example perform a lookup request at a center of a financial institution managing an account of the user, a credit card center, or the like, and after confirming that payment of the requested monetary amount is possible (S501), at electronic money processing unit 146 (replenishment processing means), electronic money information at electronic money information management unit 141 corresponding to user ID information is updated so as to be increased in value by an amount corresponding to the requested monetary amount (S502).

### Electronic Money Payment at Ordinary Facility

As shown in FIG. 9, when a user makes an electronic money payment at an ordinary facility; or more specifically, when making payment to remit funds for the billed amount of goods at the time that a purchase is made at a store, payment card 101 is first placed on or near card stored information transfer unit 120 of ordinary facility device 102, and user ID information is read at card stored information transfer unit 120 of ordinary facility device 102 (S600), and is sent, together with goods and services information (monetary amount) input at billed amount information receiving unit 121, to management server 104 (S601).

Management server 104 is such that, at payment processing unit 145, if, based on personal identification information at user information management unit 142 and electronic money information at electronic money information management unit 141 corresponding to the user ID information, the electronic money information is sufficient for the payment amount of the goods being purchased, payment processing is carried out such that the value of the electronic money is decreased (S602). In addition, payment results (a payment report) are sent to ordinary facility device 102 (S603), and, at electronic money processing unit 146, update is carried out by causing the value of the electronic money information at electronic money information management unit 141 to be decreased based on the electronic money information that has been modified as a result of payment (S604), and electronic money balance information and other such activity history information managed at activity history information management unit 143 are updated (S605).

### Electronic Money Payment (Remitting Funds for Admission Fee) at Casino Facility

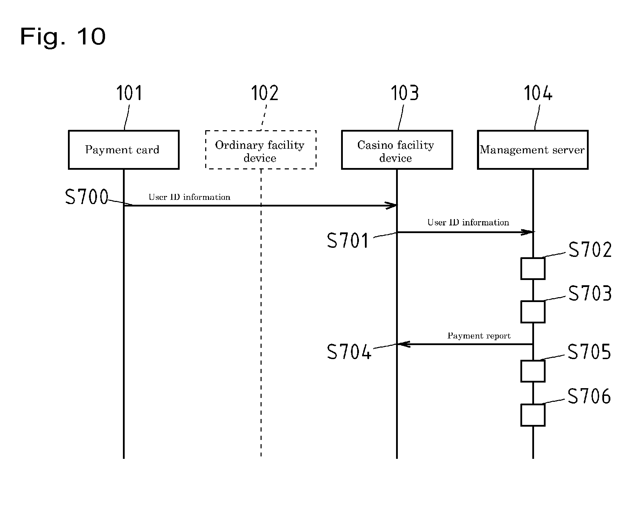

As shown in FIG. 10, when a user makes an electronic money payment at a casino facility; or more specifically, when making payment to remit funds for the admission fee at a ca facility, payment card 101 is first placed on or near card stored information transfer unit 130a of visitor entrance/exit device 150 installed at the casino facility entrance/exit, user ID information is read at card stored information transfer unit 130a (S700), and such user ID information is sent to management server 104 (S701). At visitor management unit 132 of management server 104, based on personal identification information at user information management unit 142 corresponding to the user ID information, determination is made as to whether the user is a person who should be allowed entrance into the casino facility (S702).

Management server 104 is such that if it is determined that the user is a person who should be allowed entrance into the casino facility, then, at payment processing unit 145, based on personal identification information at user information management unit 142 and electronic money information at electronic money information management unit 141 corresponding to the user ID information read at card stored information transfer unit 130a, comparison is made with casino usage information pertaining to the admission fee at visitor entrance/exit device 150 input at billed amount information receiving unit 131; and if the electronic money information is sufficient for the payment amount of the admission fee, payment processing is carried out such that the value of the electronic money is decreased (S703).

In addition, management server 104 is such that payment results (a payment report) are sent to casino facility device 103 (S704), and, at electronic money processing unit 146, update is carried out by causing the value of the electronic money information at electronic money information management unit 141 to be decreased based on the electronic money information that has been modified as a result of payment (S705), and electronic money balance information and other such activity history information managed at activity history information management unit 143 are updated (S706).

### Electronic Money Payments (Remitting Funds as Game Consideration and Receiving Refund of Winnings) at Casino Facility

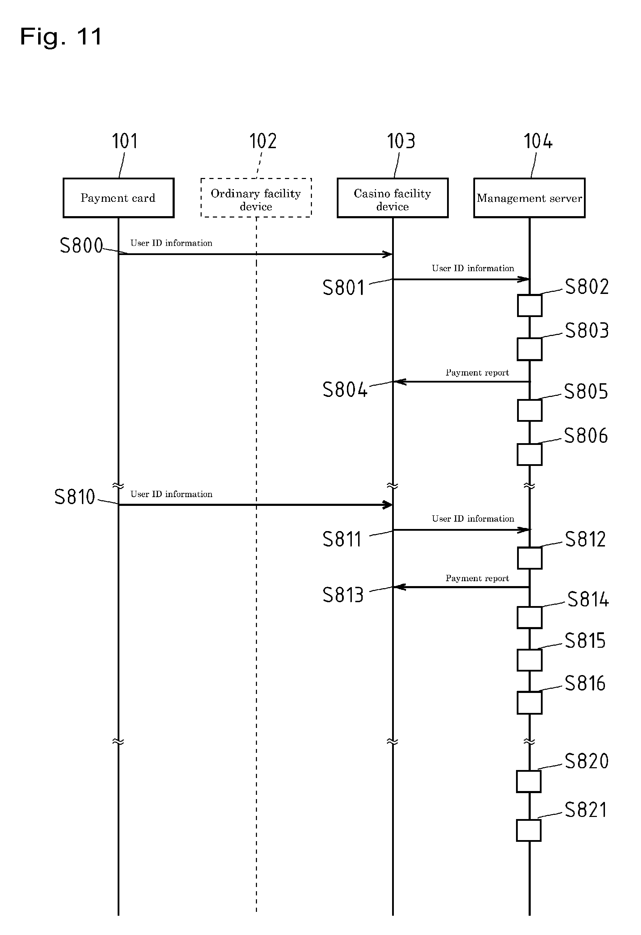

As shown in FIG. 11, when a user makes an electronic money payment at a casino facility; or more specifically, first, when making payment to remit funds in the form of game consideration arising in connection with casino services, a user who has entered a casino facility places payment card 101 on or near card stored information transfer unit 130b or 130c of amusement money purchase device 151 or chip purchase device 152 installed at installed at a prescribed casino game machine or table game machine, user ID information is read at card stored information transfer unit 130b or 130c (S800), such user ID information is sent to management server 104 (S801), and determination is made at payment processing unit 145 of management server 104 as to whether the user is a person whose identity can be ascertained based on personal identification information at user information management unit 142 corresponding to the user ID information (S802).

Management server 104 is such that if the user is a person whose identity can be ascertained, then, at payment processing unit 145, based on personal identification information at user information management unit 142 and electronic money information at electronic money information management unit 141 corresponding to the user ID information read at card stored information transfer unit 130b or 130c, comparison is made with the amount of funds to be remitted in the form of game consideration at amusement money purchase device 151 or chip purchase device 152 input at billed amount information receiving unit 131; and if the electronic money information is sufficient for the payment amount of the funds to be remitted in the form of game consideration, payment processing is carried out such that the value of the electronic money is decreased (S803).

In addition, management server 104 is such that payment results (a payment report) are sent to casino facility device 103 (S804), and, at electronic money processing unit 146, update is carried out by causing the value of the electronic money information at electronic money information management unit 141 to be decreased based on the electronic money information that has been modified as a result of payment (S805), and electronic money balance information and other such activity history information managed at activity history information management unit 143 are updated (S806).

On the other hand, when receiving payment for refund of winnings arising in connection with casino services, payment card 101 is placed on or near card stored information transfer unit 130d of winnings refund device 153 installed at a prescribed information counter or the like, user ID information is read at card stored information transfer unit 130d (S810), such user ID information is sent to management server 104 (S811), and, based on personal identification information at user information management unit 142 and electronic money information at electronic money information management unit 141 corresponding to the user ID information, payment processing is carried out such that the value of the electronic money is increased in correspondence to the winnings to be refunded at payment processing unit 145 of management server 104 (S812).

At this time, management server 104 is such that payment results (a payment report) are sent to casino facility device 103 (S813), and, if the refunded money for which payment processing was carried out at payment processing unit 145 is a prescribed amount or higher, user tax collection management unit 138 causes the amount of tax to be paid by the user to the national or local public entity to be calculated and stored (S814). In addition, management server 104 is such that update is carried out at electronic money processing unit 146 so as to increase the value of the electronic money information at electronic money information management unit 141 by a monetary amount corresponding to the amount of the refunded winnings based on the payment processing that was carried out at casino payment processing unit 145 (S815), and is such that electronic money balance information and other such activity history information managed at activity history information management unit 143 is updated based on information pertaining to the casino facility amusement history of the user (S816).

Moreover, management server 104 is such that, in accompaniment to the aforementioned series of payment processing operations for refund of winnings or remittance of funds as game consideration, refunded money information based on refunded money or remitted money information corresponding to money remitted as game consideration, for which processing of payment was carried out at payment processing unit 145, is stored at casino payment management unit 136 (S820); and, at casino operator tax collection management unit 137, amount(s) of casino tax(es) to be paid by the casino operator to national and local public entities are calculated and stored based on refunded money information and remitted money information stored at casino payment management unit 136 (S821).

Thus, because electronic money payment system 200 of the present working example is equipped with payment card 101 that stores user ID information, separate user ID information being established for each user; electronic money information management unit 141 that manages electronic money information in association with user ID information; user information management unit 142 that manages personal identification information including passport information of inbound tourist(s) in association with user ID information; payment processing unit 145 serving as ordinary payment processing means that carries out processing of payment of electronic money corresponding to ordinary goods transactions and/or services provided at a non-casino facility based on personal identification information and electronic money information corresponding to user ID information stored at payment card 101; payment processing unit 145 serving as casino payment processing means that carries out processing of payment of electronic money corresponding to refund of winnings and/or remittance of funds as game consideration arising in connection with casino services at an integrated resort based on personal identification information and electronic money information corresponding to user ID information stored at payment card 101; and electronic money processing unit 146 that updates electronic money information stored at electronic money information management unit 141 based on payment processing at payment processing unit 145, it permits easy assembly of a client server system architecture which may be referred to as a "thin client system" and which carries out payment processing and/or management of electronic money information at server(s) (management server 4); and by causing arithmetic operations to be carried out at management server 4 having electronic money information management unit 141, user information management unit 142, payment processing unit 145, and electronic money processing unit 146, it permits reduction in processing load at client terminal(s), makes it possible achieve reduction in size and/or weight of client terminal(s), and permits attainment of a system which excels in security and expandability.

Note that whereas the above working example (see, inter alia, FIG. 7) was constituted such that payment processing unit 145 served as both ordinary payment processing means and casino payment processing means, it is also possible to separate ordinary payment processing and casino payment processing by providing payment processing means that respectively correspond thereto.

Furthermore, whereas electronic money payment system 100 of the above working example (see, inter alia, FIG. 1) was described in terms of a situation in which payment card 1 serving as payment card means was constituted so as to be a noncontact-type card, the constitution of such payment card means is not limited thereto, it being possible, for example, for this to be constituted in the form of an electronic device (SIM card) capable of being installed in a mobile telephone serving as mobile terminal apparatus, or for this to be constituted such that it is incorporated into a communication terminal device that has functionality for NFC (near field communication).

Furthermore, at electronic money payment system 100 of the above working example (see, inter alia, FIG. 1), while there is no particular limitation with respect to any limit which may be applied to the payment amount at payment card 1, by requesting confirmation of the user's identity by some method such as one based on personal identification information stored at payment card 1 at the time of use involving payment of a certain amount or higher, it will be possible to prevent unintended financial loss to the user as a result of theft, loss, or the like. In such case, payment card 1 might, for example, be equipped with fingerprint authentication or other such physical authentication functionality.

Furthermore, whereas electronic money payment system 100 of the above working example (see, inter alia, FIG. 1) was described in terms of a constitution in which one ordinary facility device 2 and casino facility device 3 were connected so as to be capable of communication with management server 4 by way of communication network 10, the number(s) of ordinary facility device(s) 2 and/or casino facility device(s) 3 that may be connected to management server 4 is not limited thereto, it being possible to arbitrarily employ one or a plurality thereof.

Furthermore, at electronic money payment system 100 of the above working example (see, inter alia, FIG. 1), constitution of the processing unit(s) making up ordinary facility device 2, casino facility device 3, and management server 4 are not limited thereto, it being possible for these to be made up of one device or a plurality of devices.

Furthermore, whereas electronic money payment system 100 of the above working example was described in terms of a situation in which management server 4 was constituted so as to be a single device comprising a Web server; application server; database server; and so forth, this may be constituted by respectively separate server devices.

### INDUSTRIAL UTILITY

The present invention, as an electronic money payment system in which electronic money is used to make payment for various services and/or purchases of goods that are provided to inbound tourist(s) at an integrated resort including a casino, is capable of being employed in a payment system that permits control of financial operations serving as foundation for IRs and inbound-tourism-related strategies, that permits contributions to be made to reduction of stress and improved convenience for inbound tourist(s), and that permits safe and secure operation of an integrated resort including a casino.

### EXPLANATION OF REFERENCE NUMERALS

1 Payment card (payment card means)
2 Ordinary facility device
3 Casino facility device
4 Management server
10 Communication network
11 User ID information storage unit
12 Electronic money information storage unit
13 Personal identification information storage unit 20 Card stored information transfer unit
22 Ordinary payment processing unit (ordinary payment processing means)
23 Electronic money processing unit
30 Card stored information transfer units
32 Visitor management unit
33 Casino payment processing unit (casino payment processing means)
34 Electronic money processing unit (electronic money processing means)
36 Casino payment management unit (casino payment storage means)
37 Casino operator tax collection management unit (casino operator tax collection management means)
38 User tax collection management unit (user tax collection management means)
40 Management information management unit
41 Electronic money information management unit
42 User information management unit
43 Activity history information management unit (activity history information management means)
44 Replenishment processing unit (replenishment processing means)
100 Electronic money payment system

## Claims

1. An electronic money payment system in which electronic money is used to make payment for various services or purchases of goods that are provided to an inbound tourist at an integrated resort including a casino, the electronic money payment system for the inbound tourist at the integrated resort including the casino comprising:
payment card means that stores personal identification information including passport information of the inbound tourist and electronic money information;
ordinary payment processing means that carries out processing of payment of electronic money corresponding to ordinary goods transactions and/or services provided at a non-casino facility based on personal identification information and electronic money information stored at the payment card means;
casino payment processing means that carries out processing of payment of electronic money corresponding to refund of winnings and/or remittance of funds as game consideration arising in connection with casino services at the integrated resort based on the personal identification information and the electronic money information stored at the payment card means; and
electronic money processing means that updates the electronic money information stored at the payment card means based on payment processing at the ordinary payment processing means and/or the casino payment processing means.

2. An electronic money payment system in which electronic money is used to make payment for various services or purchases of goods that are provided to an inbound tourist at an integrated resort including a casino, the electronic money payment system for the inbound tourist at the integrated resort including the casino comprising:
payment card means that stores user ID information, separate user ID information being established for each user;
electronic money information management means that manages electronic money information in association with the user ID information;
user information management means that manages personal identification information including passport information of the inbound tourist in association with the user ID information;
ordinary payment processing means that carries out processing of payment of electronic money corresponding to ordinary goods transactions and/or services provided at a non-casino facility based on the personal identification information and the electronic money information corresponding to the user ID information stored at the payment card means;
casino payment processing means that carries out processing of payment of electronic money corresponding to refund of winnings and/or remittance of funds as game consideration arising in connection with casino services at the integrated resort based on the personal identification information and the electronic money information corresponding to the user ID information stored at the payment card means; and
electronic money processing means that updates the electronic money information stored at the electronic money information management means based on payment processing at the ordinary payment processing means and/or the casino payment processing means.

3. The electronic money payment system for the inbound tourist at the integrated resort including the casino according to claim 1 or claim 2 comprising:
casino payment management means that stores refunded money information based on refunded winnings and remitted money information corresponding to remittance of funds in the form of game consideration for which payment processing has been carried out at the casino payment processing means; and
casino operator tax collection management means that calculates and stores an amount of a casino tax to be paid by a casino operator to a national and/or local public entity based on the refunded money information and the remitted money information stored at the casino payment management means.

4. The electronic money payment system for the inbound tourist at the integrated resort including the casino according to any one of claim 1 through claim 3 comprising:
user tax collection management means that, in the event that payment of refunded money of a prescribed amount or higher has been processed at the casino payment processing means, calculates and stores an amount of a tax to be paid by the user to a national and/or local public entity.

5. The electronic money payment system for the inbound tourist at the integrated resort including the casino according to any one of claim 1 through claim 4 comprising:
replenishment processing means that, upon receipt of a request for replenishment of electronic money corresponding to refund of winnings from the casino payment processing means, causes the electronic money information stored at the payment card means or the electronic money information management means to be updated so as to be replenished with the corresponding electronic money.

6. The electronic money payment system for the inbound tourist at the integrated resort including the casino according to any one of claim 1 through claim 5 comprising:
activity history information management means that manages information pertaining to a history of activities of the user as supported by electronic money usage status based on payment processing at the ordinary payment processing means and/or the casino payment processing means.

7. The electronic money payment system for the inbound tourist at the integrated resort including the casino according to any one of claim 1 through claim 6 wherein the ordinary payment processing means is such that, in the event that there is a certain degree of usage history at the same facility, processing is carried out such that a discount is applied to payment of electronic money corresponding to the ordinary goods transactions and/or the services provided.
